# EUROPÄISCHE PATENTSCHRIFT

(11) **EP 1 347 908 B1**
(45) Veröffentlichungstag und Bekanntmachung des Hinweises auf die Patenterteilung: **16.04.2008**
(21) Anmeldenummer: 01997428.6
(22) Anmeldetag: 22.11.2001
(51) Int. Cl.: B60T 8/36, F16K 31/06, B60T 13/68, H03K 7/08

(54) **VORRICHTUNG ZUR ANSTEUERUNG VON BREMSVENTILEN**
DEVICE FOR CONTROLLING BRAKE VALVES
DISPOSITIF DE COMMANDE DE SOUPAPES DE FREIN

(30) Priorität: 22.11.2000 DE 10057900
(43) Veröffentlichungstag der Anmeldung: 01.10.2003
(73) Patentinhaber: KNORR-BREMSE SYSTEME FÜR NUTZFAHRZEUGE GMBH, 80809 München (DE)
(72) Erfinder: WÖRNER, Dieter, 75031 Eppingen (DE); BLANC, Martin, 75438 Knittlingen/Kleinvillars (DE); HERGES, Michael, 70825 Korntal-Münchingen (DE)
(86) Internationale Anmeldenummer: PCT/EP2001/013581
(87) Internationale Veröffentlichungsnummer: WO 2002/042136

(56) Entgegenhaltungen:
- DE-A- 4 241 121
- DE-A- 19 610 665
- DE-A- 19 616 815
- DE-A- 19 635 253
- DE-A- 19 742 037
- DE-A- 19 937 475

## Beschreibung

Die Erfindung bezieht sich auf eine Vorrichtung zur Ansteuerung von Bremsdruckventilen gemäß dem Oberbegriff des Patentanspruches 1. Eine solche Vorrichtung ist aus der DE-A 196 10 665 bekannt. Dort wird zur Ansteuerung und Regelung von elektropneumatischen Druckregelventilen mit pulsweitenmodulierten Ansteuersignalen vorgeschlagen, die Versorgungsspannung der Vorrichtung zu berücksichtigen, indem eine der ermittelten Versorgungsspannung proportionale Spannung in einem Rückkoppelungszweig eingebracht wird.

Die DE-A 42 41 121 zeigt eine Steuerschaltung für die Ansteuerung von Magnetventilen, bei der in einer Speichermatrix Werte für das Tastverhältnis der Ansteuersignale gespeichert sind, wobei diese Werte von Ditherfrequenz, Betriebsspannung und Anforderung abhängen. Zwischenwerte werden durch einen Interpolationsrechner bereitgestellt.

Die DE-A 197 42 037 beschreibt ein Verfahren zur Abfallerkennung des Magnetankers eines Magnetventils. Das Abfallen des Ankers wird durch Auswertung des Verlaufes des Spulenstroms erkannt. Die Ansteuerung erfolgt durch einen Mikrokontroller im Zwei-Punkt-Betrieb. Zum Einschalten wird ein hoher Strom und im Haltebetrieb ein verminderter Strom durch die Spule des Magnetventils geleitet. Wird während des Haltebetriebes ein Abfallen des Ankers erkannt, so wird für eine kurze Zeit automatisch ein neuer Einschaltimpuls in Höhe des hohen Einschaltstromes erzeugt.

Bei modernen Nutzfahrzeugbremsanlagen sind den einzelnen Radbremsen elektrisch ansteuerbare, elektropneumatische Modulatoren (Druckregelmodule) zugeordnet, die entsprechend einer Bremsanforderung des Fahrers Bremsdruck in die Bremszylinder einsteuern. Die Druckregelmodule weisen jeweils ein elektromagnetisches Schaltventil auf, das pulsartig schaltet und in die Steuerkammer eines Relaisteils Vorratsluft einläßt bzw. entlüftet.

Für eine möglichst exakte Bremsdruckregelung sollten gleiche Pulszeiten in jedem Betriebszustand der Bremsanlage möglichst gleiche Bremsdruckänderungen bewirken. Insbesondere sollten unabhängig von der momentanen Versorgungsspannung stets die gleichen Stromverläufe im Elektromagneten des Schaltventils während eines Pulses vorliegen. Es wird nämlich angestrebt, eine weltweit einsetzbare Bremsdruckregelvorrichtung zu schaffen, mit der verschiedene Versorgungsspannungen zwischen 9V und 36V beherrschbar sind. Für eine hinreichend große "magnetische Schaltkraft" müssen die Magnetspulen bei kleinen Versorgungsspannungen kleine ohmsche Widerstände haben. Kleine Widerstände würden aber bei hohen Versorgungsspannungen zu sehr großen Spulenströmen führen.

Bei Bremsdruckregelmodulen wird ferner eine hohe "Schaltdynamik" verlangt, wobei die Durchlaßquerschnitte relativ groß sein müssen. Um aber gleichzeitig eine gute Stufbarkeit des Bremsdrucks zu erzielen, müssen sehr kurze Öffnungszeiten möglich sein. Damit aber bei derart kurzen Öffnungszeiten noch eine definierte Ankerbewegung zustande kommt, müssen die Ventile zu Beginn eines Pulses schnell öffnen und am Ende schnell wieder abfallen. Dies hat zur Folge, daß zunächst sehr schnell eine große Energiemenge, d.h. ein hoher Magnetstrom, in die Spule fließen muß, damit der Anker schnell und sicher vom Ventilsitz abhebt. Am Pulsende muß die in der Spule gespeicherte Energie möglichst schnell abgebaut werden, damit der Anker von einer Rückstellfeder schnell wieder zurückbewegt wird und den Ventilsitz abdichtet. Dies erfordert einen möglichst geringen Magnetstrom. Trotz der geforderten hohen Schaltdynamik müssen die Magnete eine hohe prozentuale Einschaltdauer (ED) aufweisen, auch bei Betriebstemperaturen von ca. 80°C. Dies erfordert kleine Ströme.

Aufgabe der Erfindung ist es, eine Vorrichtung zur Bremsdrucksteuerung zu schaffen, welche die oben genannten Anforderungen erfüllt.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Bei der Erfindung wird der Elektromagnet so erregt, daß bei Beginn der Öffnung/Schließbewegung des Ankers der Effektivwert der am Elektromagneten anliegenden Spannung gleich einer vorgegebenen Anzugsspannung ist, die größer als eine Mindestanzugsspannung des Ankers ist. Bei angezogenem Anker wird der Elektromagnet dagegen so erregt, daß der Effektivwert der in dieser Ankerstellung am Elektromagneten anliegenden Spannung gleich einer vorgegebenen Haltespannung ist, die kleiner als die Anzugsspannung ist. Weiter wird zyklisch in regelmäßigen Abständen oder bei Bedarf kurzzeitig für eine vorgegebene Zeitdauer die Erregung des Elektromagneten derart verändert, daß am Elektromagneten eine Effektivspannung anliegt, die größer als die Haltespannung und kleiner als die Anzugsspannung ist.

Im folgenden wird die Erfindung anhand eines Ausführungsbeispiels im Zusammenhang mit der Zeichnung näher erläutert. Es zeigen:
- Fig. 1: eine Vorrichtung gemäß der Erfindung in schematischer Darstellung;
- Fig. 2a: ein Spannungs-Zeitdiagramm eines ersten Ausführungsbeispiels der Erfindung;
- Fig. 2b: ein Strom-Zeitdiagramm entsprechend Fig. 2a;
- Fig. 2c: ein Ankerstellungs-Zeitdiagramm entsprechend Fig. 2a bzw. 2b;
- Fig. 3a: ein Spannungs-Zeitdiagramm eines zweiten Ausführungsbeispiels der Erfindung;
- Fig. 3b: ein Strom-Zeitdiagramm entsprechend Fig. 3a; und
- Fig. 3c: ein Ankerstellungs-Zeitdiagramm entsprechend Fig. 3a bzw. 3b.

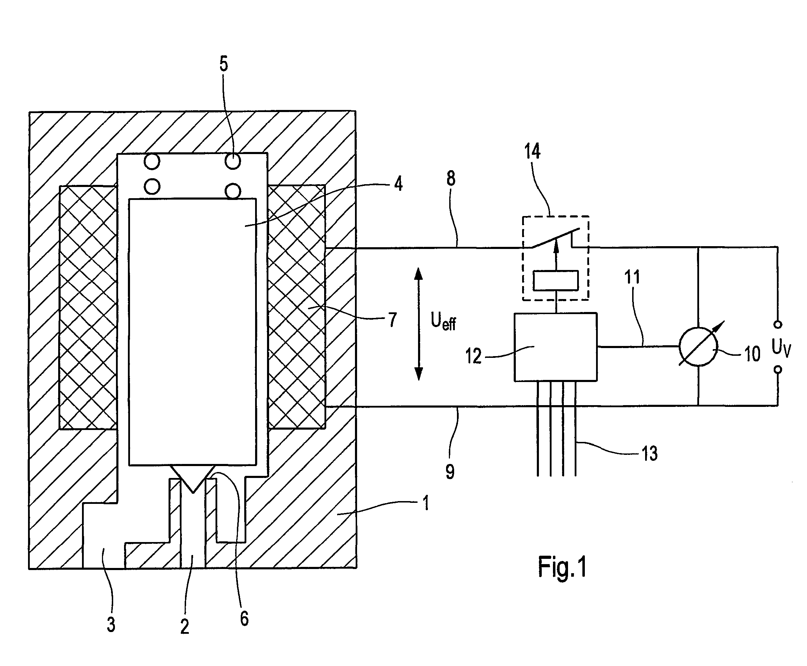

Fig. 1 zeigt ein Bremsdruckregelventil mit einem Gehäuse 1, einem Vorratsdmckeingang 2 und einem Bremsdruckausgang 3. Im Gehäuse 1 ist ein Anker 4 angeordnet, der durch eine Feder 5 vorgespannt ist und in dem hier gezeigten nicht erregten Zustand des Bremsdruckregelventils gegen einen Ventilsitz 6 gedrückt wird, so daß der Vorratsdruckeingang 2 gegenüber dem Bremsdruckausgang 3 abgesperrt ist. Im Gehäuse 1 ist ferner ein Elektromagnet 7 angeordnet, der über elektrische Leitungen 8, 9 mit einer Versorgungsspannung Uᵥ verbindbar ist. In erregtem Zustand übt der Elektromagnet 7 auf den Anker 4 eine der Feder 5 entgegenwirkende Kraft aus, so daß der Anker 4 vom Ventilsitz 6 abhebt und der Vorratsdruckeingang 2 zum Bremsdruckausgang 3 durchgeschaltet wird.

Ferner ist ein Spannungsmesser 10 vorgesehen, der ständig die Versorgungsspannung Uᵥ mißt und das Meßergebnis über eine Leitung 11 einer Steuerelektronik 12 zuführt. Über Leitungen 13 werden der Steuerelektronik 12 ferner verschiedene Eingangssignale zugeführt, wie z.B. ein vom Fahrer über das Bremspedal vorgegebenes Bremsanforderungssignal, von Raddrehzahlsensoren gelieferte Raddrehzahlsignale, etc. In Abhängigkeit von der gemessenen Versorgungsspannung Uv und den Eingangssignalen 13 steuert die Steuerelektronik 12 eine hier nur schematisch dargestellte Schalteinrichtung 14. Die Schalteinrichtung 14 ist für eine schnelle pulsweise Schaltung ausgelegt, d.h. die am Elektromagnet 7 anliegende effektive Spannung U_{eff} kann durch Variieren des Tastverhältnisses, d.h. der Taktung der Schalteinrichtung 14 in Abhängigkeit von der Versorgungsspannung Uᵥ verändert werden.

Durch Variierung des von der Steuerelektronik 12 vorgegebenen Tastverhältnisses kann also die am Elektromagneten 7 anliegende Effektivspannung U_{eff} variiert werden. Ein vorgegebener gewünschter Öffnungs- bzw. Schließbewegungsablauf des Ankers 4 kann somit selbst bei unterschiedlichen bzw. im Betrieb schwankenden Versorgungsspannung Uv allein durch Anpassung des Tastverhältnisses erreicht werden.

Alternativ zu dem hier gezeigten Ausführungsbeispiel, bei dem die Versorgungsspannung Uᵥ gemessen wird, könnte auch die momentan am Elektromagnet anliegende Spannung bzw. die sich hieraus ergebende Effektivspannung U_{eff} gemessen und zur Regelung des Tastverhältnisses verwendet werden.

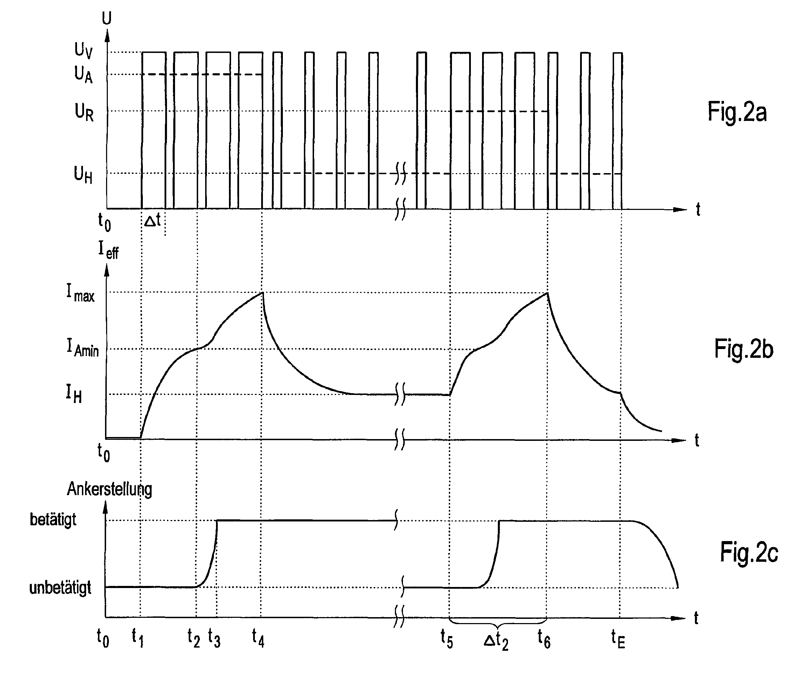

Die Schaltvorgänge werden nun im Zusammenhang mit den Figuren 2a-2c näher erläutert.

Im Spannungs-Zeitdiagramm der Fig. 2a sind folgende Spannungspegel eingezeichnet:
- Uv: Versorgungsspannung,
- U_{A}: Anzugsspannung des Ankers,
- U_{H}: Haltespannung des Ankers,
- U_{R}: Refresh-Spannung.

Im Strom-Zeitdiagramm der Fig. 2b ist der im Elektromagnet fließende Effektivstrom I_{eff} über der Zeit dargestellt, wobei folgende Effektivströme eingezeichnet sind:
- Iₘₐₓ: der bei maximaler Erregung des Elektromagneten fließende Strom,
- I_{Amin}: der minimale zum Anziehen des Ankers erforderliche Strom,
- I_{H}: der zum Halten des Ankers erforderliche Haltestrom.

In der Zeit zwischen t₀ und t₁ ist der Elektromagnet nicht erregt, und der Anker befindet sich in seiner unbetätigten Stellung. Im Zeitpunkt t₁ wird der Elektromagnet mit einem Versorgungsspannungsimpuls Uᵥ der "Breite" bzw. Zeitdauer Δt erregt. Im Zeitintervall t₁ bis t₄ werden, wie aus Fig. 2a ersichtlich, vier derartige Spannungsimpulse aufgeschaltet. Die Breite der Spannungsimpulse und die Zeitdauer der dazwischenliegenden nicht erregten Zustände sind von der Steuerelektronik so vorgegeben, daß am Magneten eine Effektivspannung anliegt, die hier als Anzugsspannung U_{A} bezeichnet ist und die kleiner als die Versorgungsspannung U_{V} ist.

Im Zeitintervall [t₁, t₄] dauert es bis zum Zeitpunkt t₂, bis im Magneten der Strom auf einen Mindestanzugsstrom I_{Amin} angestiegen ist. Dementsprechend bleibt der Anker bis zum Zeitpunkt t₂ in seiner unbetätigten Stellung. Mit anderen Worten ist erst bei dem Spulenstrom I_{Amin} die Stärke des Magnetfelds hinreichend groß, so daß der Anker entgegen der Federkraft bewegt werden kann. Im Zeitintervall [t₂, t₃] wird der Anker durch die Magnetkraft entgegen der Federkraft betätigt und geht in seinen erregten Zustand. Bis zum Zeitpunkt t₄ erhöht sich der im Elektromagneten fließende Spulenstrom Iₘₐₓ entsprechend dem Wert der anliegenden Effektivspannung, d.h. der Anzugsspannung U_{A}.

Wenn der Anker voll angezogen hat, braucht er nur noch in dieser Stellung gehalten werden, was mit einer geringeren Magnetkraft, d.h. mit einer geringeren Effektivspannung und einem geringeren Strom möglich ist. Hierzu wird im Zeitpunkt t₄ die "Breite" der Spannungsimpulse verringert bzw. die Zeitspanne zwischen den Spannungsimpulsen, in der der Elektromagnet nicht erregt wird, wird vergrößert, was aus Fig. 2a ersichtlich ist. Durch die Variierung des Tastverhältnisses verringert sich die am Elektromagnet anliegende Effektivspannung auf die Haltespannung U_{H}. Folglich nimmt auch der in Fig. 2b gezeigte im Elektromagneten fließende Strom auf einen Wert I_{H} ab, ohne daß sich an der Stellung des Ankers etwas ändert.

Für den Fall, daß der Anker durch hohe äußere Beschleunigungen oder andere Störeinflüsse unbeabsichtigt abfällt, kann zyklisch oder bei Erkennen eines solchen Abfalls für eine Zeitspanne Δt₁ durch eine Veränderung des Tastverhältnisses wieder eine höhere Effektivspannung, die hier als "Refresh-Spannung" U_{R} bezeichnet ist, angelegt werden. In dem "Refresh-Zeitintervall" [t₅, t₆] wird die Breite der Spannungsimpulse vergrößert, so daß die am Elektromagneten anliegende Effektivspannung von U_{H} auf U_{R} ansteigt. Dementsprechend steigt im Zeitintervall [t₅, t₆] auch der Strom von I_{H} auf Iₘₐₓ an, und der Anker erreicht dadurch wieder seine betätigte Stellung. Nach dieser "Refresh-Phase" wird das Tastverhältnis wieder so geändert, daß die am Elektromagneten anliegende Effektivspannung gleich der Haltespannung U_{H} ist und der Spulenstrom dementsprechend wieder auf I_{H} absinkt.

Im Zeitpunkt t_{E} wird das Bremsventil vollständig deaktiviert, d.h. die Spannung bzw. der Strom werden abgeschaltet, so daß nach einer kurzen sich an t_{E} anschließenden Verzögerungszeit der Anker in seine unbetätigte Stellung zurückfällt, was aus Fig. 2c ersichtlich ist.

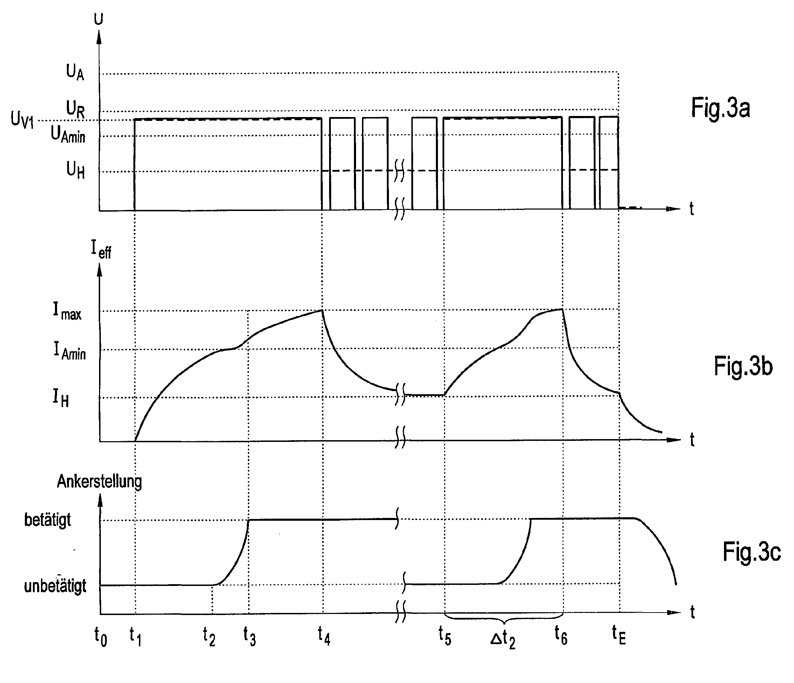

In den Figuren 3a-3c ist der Fall dargestellt, daß die Versorgungsspannung auf einen Wert U_{V1} absinkt, der kleiner als die Anzugsspannung U_{A}, aber größer als die Mindestanzugsspannung U_{Amin} ist. In diesem Fall würde selbst bei einem Tastverhältnis von 100%, d.h. wenn die Versorgungsspannung permanent eingeschaltet ist, die Anzugsspannung U_{A} nicht erreicht. In diesem Fall kann der Anker trotzdem angezogen werden, wenn die durch die Steuerelektronik vorgegebene Anzugszeit auf eine Zeitspanne [t₁, t₄] verlängert wird, wobei der Anzugsvorgang des Ankers im Zeitpunkt t₂ beginnt und der Anker im Zeitpunkt t₃ voll angezogen ist. Analog zu den Figuren 2a-2c wird auch hier die Anzugsspannung weiter aufrechterhalten, wobei sich ein der verringerten Versorgungsspannung U_{V1} entsprechender maximaler Anzugsstrom Iₘₐₓ im Zeitpunkt t₄ einstellt.

Ist der Anker voll angezogen, so werden entsprechend den Figuren 2a-2c die Haltespannung bzw. der Haltestrom auf U_{H} bzw. I_{H} verringert. Die Verringerung der Effektivspannung auf U_{H} erfolgt entsprechend Fig. 3c im Zeitintervall [t₄, t₅] durch eine Variierung des Tastverhältnisses, d.h. durch eine pulsweise Beaufschlagung des Elektromagneten mit der verringerten Versorgungsspannung U_{V1}.

Auch in dem in den Figuren 3a-3c dargestellten Fall einer verringerten Versorgungsspannung U_{V1}, die kleiner als die Refresh-Spannung U_{R} ist, kann noch ein "Refresh" ausgeführt werden. Jedoch wird hier im Unterschied zu den Figuren 2a-2c die Zeitspanne Δt₁ (Fig. 2c) auf Δt₂ erhöht, so daß der Refresh-Vorgang etwas länger dauert. Eine Grenze für die Versorgungsspannung bildet die Mindestanzugsspannung U_{Amin} des Magnetventils.

Analog zu den Figuren 2a-2c wird nach dem Refresh im Zeitpunkt t₆ das Tastverhältnis erneut geändert, so daß die Effektivspannung wieder auf die Haltespannung U_{H} und der Effektivstrom auf I_{H} absinken. Im Zeitpunkt t_{E} wird die Spannung bzw. der Strom ausgeschaltet, und der Anker kehrt in seine unbetätigte Ausgangsstellung zurück.

Aus den Figuren 2a und 3a ist ersichtlich, daß die "hohe" Effektivspannung U_{A} bzw. U_{V1} nur für eine begrenzte Zeit am Elektromagneten anliegt. Folglich ist die Strombelastung der Spule des Elektromagneten im Mittel sehr gering und die zulässige, prozentuale Einschaltdauer (ED) erhöht sich wesentlich.

Alle genannten Werte für Spannungen, Ströme, Zeiten, Taktverhältnisse etc. werden vorab experimentell oder in anderer geeigneter Weise ermittelt und werden in einer Speichereinrichtung der elektronischen Steuervorrichtung gespeichert. Im Betrieb ist dann nur noch eine Ermittlung der Versorgungsspannung U_{V} nötig.

## Patentansprüche

1. Vorrichtung zur Ansteuerung von Bremsdruckventilen, die einen Vorratsdruckeingang (2), einen Bremsdruckausgang (3), einen Elektromagneten (7) und einen durch Erregung des Elektromagneten (7) betätigbaren Anker (4) zum Freigeben bzw. Absperren des Vorratsdruckeingangs (2) gegenüber dem Bremsdruckausgang (3) aufweisen,
mit einer Spannungsquelle (U_{V}) und einer Steuerelektronik (12, 14) zum pulsweisen Erregen des Elektromagneten (7) und
mit einer Meßeinrichtung (10) zum Bestimmen der aktuell vorhandenen Versorgungsspannung (U_{V}),
wobei die Steuerelektronik (12, 14) zum Erzeugen eines vorgegebenen Öffnungs- bzw. Schließbewegungsablaufes des Ankers (4) pulsbreitenmodulierte Spannungsimpulse zur Erregung des Elektromagneten (7) erzeugt und die Impulszeiten in Abhängigkeit von der aktuell vorhandenen Versorgungsspannung (U_{V}) variiert,
**dadurch gekennzeichnet,**
**dass** der Elektromagnet (7) so erregt wird, dass bei Beginn der Öffnungs-/Schließbewegung des Ankers (4) der Effektivwert der am Elektromagneten (7) anliegenden Spannung gleich einer vorgegebenen Anzugsspannung (U_{A}) ist, die größer als eine Mindestanzugsspannung (U_{Amin}) des Ankers (4) ist,
**dass** bei angezogenem Anker (4) der Elektromagnet (7) so erregt wird, dass der Effektivwert der in dieser Ankerstellung am Elektromagneten (7) anliegenden Spannung gleich einer vorgegebenen Haltespannung (U_{H}) ist, die kleiner als die Anzugsspannung (U_{A}) ist, und
**dass** zyklisch in regelmäßigen Abständen oder bei Bedarf kurzzeitig für eine vorgegebene Zeitspanne (Δt₁) die Erregung des Elektromagneten (7) derart verändert wird, dass am Elektromagneten (7) eine Effektivspannung (U_{R}) anliegt, die größer als die Haltespannung (U_{H}) und kleiner als die Anzugsspannung (U_{A}) ist.

2. Vorrichtung nach Anspruch 1, **dadurch gekennzeichnet,**
**dass** ein Drucksensor zur Messung des aktuellen Vorratsdruckes und ein Drucksensor zur Messung des Ist-Bremsdruckes vorgesehen ist.

3. Vorrichtung nach Anspruch 1 oder 2, **dadurch gekennzeichnet,**
**dass** ein elektronischer Speicher vorgesehen ist, der mit der Steuerelektronik verbunden ist, wobei in dem Speicher Kennfelder gespeichert sind, anhand derer aus aktuell vorliegenden Bremssystemparametern, wie dem momentanen ist-Bremsdruck und dem aktuellen Vorratsdruck, Soll-Pulszeiten bzw. Soll-Pulsfrequenzen für die Ansteuerung des Elektromagneten (7) entnehmbar sind.

4. Vorrichtung nach einem der Ansprüche 1 bis 3, **dadurch gekennzeichnet,**
**dass** die Steuerelektronik (12) die gespeicherten Soll-Pulszeiten bzw. Soll-Pulsfrequenzen nach aktuell gelernten Parametern modifiziert.

5. Vorrichtung nach einem der Ansprüche 1 bis 4, **dadurch gekennzeichnet,**
**dass** der Elektromagnet (7) und der Anker (4) so dimensioniert sind, dass der Anker bei der niedrigst möglichen im Betrieb auftretenden Versorgungsspannung anzieht.

## Claims

1. Device for controlling braking pressure valves that comprise a reserve pressure inlet (2), a braking pressure outlet (3), an electromagnet (7) and an armature (4) that can be actuated by energising the electromagnet (7) so as to open or block the reserve pressure inlet (2) relative to the braking pressure outlet (3),
with a voltage source (U_{V}) and an electronic control unit (12, 14) for the pulsed energising of the electromagnet (7), and with a measurement device (10) to determine the currently existing supply voltage (U_{V}),
such that the electronic control unit (12, 14) generates pulse-width-modulated voltage pulses to produce a specified opening and closing movement sequence of the armature (4) by energising the electromagnet (7) and varies the pulse durations as a function of the currently existing supply voltage (U_{V}),
**characterised in that**
the electromagnet (7) is energised in such manner that at the beginning of the opening/closing movement of the armature (4) the effective value of the voltage applied to the electromagnet (7) is equal to a specified attracting voltage (U_{A}) which is larger than a minimum attracting voltage (U_{Amin}) of the armature (4),
when the armature (4) has been attracted, the electromagnet (7) is energised in such manner that the effective value of the voltage applied to the electromagnet (7) in the said armature position is equal to a specified holding voltage (U_{H}) which is lower than the attracting voltage (U_{A}), and
Cyclically at regular intervals or if necessary briefly for a specified time (Δt₁), the energising of the electromagnet (7) is varied in such manner that an effective voltage (U_{R}) is applied to the electromagnet (7), which is higher than the holding voltage (U_{H}) and lower than the attracting voltage (U_{A}).

2. Device according to Claim 1, **characterised in that**
a pressure sensor is provided to measure the current reserve pressure and a pressure sensor is provided to measure the actual braking pressure.

3. Device according to Claims 1 or 2, **characterised in that**
an electronic memory connected to the electronic control system is provided, such that characteristic curves are stored in the said memory, with reference to which, from currently existing brake system parameters such as the momentary actual braking pressure and the current reserve pressure, nominal pulse times or nominal pulse frequencies for controlling the electromagnet (7) can be derived.

4. Device according to any of Claims 1 to 3, **characterised in that**
the electronic control system (12) modifies the stored nominal pulse times or frequencies in accordance with current, learned parameters.

5. Device according to any of Claims 1 to 4, **characterised in that**
the electromagnet (7) and the armature (4) are of a size such that the armature is attracted at the lowest possible supply voltage that occurs during operation.

## Revendications

1. Dispositif de commande de soupapes de pression de freinage, qui ont une entrée (2) de pression de réserve, une sortie (3) de pression de freinage, un électroaimant (7) et une palette (4) actionnable par excitation de l'électroaimant (7) pour dégager et fermer l'entrée (2) de pression de réserve par rapport à la sortie (3) de pression de freinage,
comprenant une source (U_{V}) de tension et une électronique (12, 14) de commande pour exciter l'électroaimant (7) par impulsion et
un dispositif (10) de mesure pour déterminer la tension (U_{V}) d'alimentation présente instantanément,
l'électronique (12, 14) de commande produisant, pour produire un déroulement du mouvement d'ouverture ou de fermeture prescrit de la palette (4), des impulsions de tension modulées en largeur d'impulsion pour l'excitation de l'électroaimant (7), et les durées d'impulsion variant en fonction de la tension (U_{V}) d'alimentation présente instantanément,
**caractérisé**
**en ce que** l'électroaimant (7) est excité de manière à ce qu'au début du mouvement d'ouverture/fermeture de la palette (4), la valeur efficace de la tension appliquée à l'électroaimant (7) soit égale à une tension (U_{A}) d'attraction prescrite, qui est plus haute que la tension (U_{Amin}) d'attraction minimum de la palette (4),
**en ce que**, lorsque la palette (4) est attirée, l'électroaimant (7) est excité, de façon à ce que la valeur efficace de la tension appliquée dans cette position de la palette à l'électroaimant (7) soit égale à une tension (U_{H}) de maintien prescrite, qui est plus basse que la tension (U_{A}) d'attraction, et
**en ce que**, cycliquement, à des intervalles réguliers, ou en cas de besoin brièvement pour un laps de temps (Δt₁) prescrit, l'excitation de l'électroaimant (7) est modifiée, de façon à appliquer à l'électroaimant (7) une tension (U_{R}) efficace qui est plus haute que la tension (U_{H}) de maintien et plus petite que la tension (U_{A}) d'attraction.

2. Dispositif suivant la revendication 1, **caractérisé**
**en ce qu'**il est prévu un capteur de pression pour mesurer la pression de réserve instantanée et un capteur de pression pour mesurer la pression de freinage réelle.

3. Dispositif suivant la revendication 1 ou 2, **caractérisé**
**en ce qu'**il est prévu une mémoire électronique qui est reliée à l'électronique de commande, dans lequel il est mémorisé, dans la mémoire, des familles de caractéristiques au moyen desquelles on peut déterminer, à partir de paramètres du système de freinage présents instantanément, comme la pression de freinage réelle instantanée et la pression de réserve instantanée, des durées d'impulsion de consigne ou des fréquences d'impulsion de consigne pour la commande de l'électroaimant (7).

4. Dispositif suivant l'une des revendications 1 à 3, **caractérisé**
**en ce que** l'électronique (12) de commande modifie les durées d'impulsion de consigne mémorisées ou les fréquences d'impulsion de consigne mémorisées suivant des paramètres appris instantanément.

5. Dispositif suivant l'une des revendications 1 à 4, **caractérisé**
**en ce que** l'électroaimant (7) et la palette (4) ont des dimensions telles que la palette attire pour la tension d'alimentation la plus basse possible se produisant en fonctionnement.
